# EUROPÄISCHE PATENTSCHRIFT

(11) **EP 1 233 844 B1**
(45) Veröffentlichungstag und Bekanntmachung des Hinweises auf die Patenterteilung: **02.01.2004**
(21) Anmeldenummer: 00972417.0
(22) Anmeldetag: 17.10.2000
(51) Int. Cl.: B23K 9/10

(54) **VERFAHREN ZUR DATENÜBERTRAGUNG UND/ODER SYNCHRONISIERUNG ZWISCHEN ZUMINDEST ZWEI SCHWEISSGERÄTEN**
METHOD FOR TRANSMITTING DATA AND/OR SYNCHRONIZING AT LEAST TWO WELDING DEVICES
PROCEDE POUR LA TRANSMISSION DE DONNEES OU LA SYNCHRONISATION ENTRE AU MOINS DEUX POSTES DE SOUDURE

(30) Priorität: 02.11.1999 AT 183199
(43) Veröffentlichungstag der Anmeldung: 28.08.2002
(73) Patentinhaber: Fronius International GmbH, 4643 Pettenbach (AT)
(72) Erfinder: BRUNNER, Michael, A-8055 Seiersberg (AT); OBERZAUCHER, Friedrich, A-4600 Wels (AT)
(74) Vertreter: Secklehner, Günter, Dr.
(86) Internationale Anmeldenummer: PCT/AT2000/000269
(87) Internationale Veröffentlichungsnummer: WO 2001/032347

(56) Entgegenhaltungen:
- EP-A- 0 936 019
- WO-A-99/58285
- US-A- 4 095 077

## Beschreibung

Die Erfindung betrifft ein Verfahren zur Datenübertragung und/oder Synchronisierung von zumindest einem Schweißgerät mit einem weiteren Schweißgerät oder einer weiteren Komponente, wie sie im Oberbegriff des Anspruchs 1 beschrieben ist (siehe, z.B. WO-A-98/34751).

Aus der WO 98/34751 A ist ein Schweißsystem mit zumindest einer Schweißstromquelle und einem oder mehreren Zusatzmodulen, insbesondere einer Drahtzufuhrvorrichtung und einer Gasversorgungsvorrichtung, bekannt, bei dem jedes Zusatzmodul einen Datenträger mit den für das jeweilige Zusatzmodul charakteristischen Daten in einem definierten Format zur Steuerung der Steuervorrichtung des Schweißgerätes aufweist. Die Daten werden dabei über eine Aufnahmevorrichtung erfaßt und anschließend von dieser über Leitungen bzw. drahtlos an das Schweißgerät zur Weiterverarbeitung weitergeleitet.

Nachteilig ist bei diesem System, daß kein direkter Datenaustausch zwischen der Steuervorrichtung und den Zusatzmodulen erfolgen kann, sondern dieser lediglich über die Aufnahmevorrichtung durchgeführt werden kann, wobei für die Aufnahme der Daten ein Benutzer die Aufnahmevorrichtung bedienen muß.

Aus der US 4 864 589 A und der US 5 684 450 A sind Verfahren zur Datenübertragung zwischen zwei verschiedenen Geräten über eine Kommunikationseinheit auf das Versorgungsnetz beschrieben, sodaß das erste Gerät Daten zum zweiten Gerät überträgt, das zweite Gerät diese Daten ausliest und verarbeitet worauf ein weiterer Datenaustausch zwischen den Geräten durchgeführt werden kann, wobei hierzu spezielle Vorgehensweisen, insbesondere spezielle Einspeisesysteme, für eine Datenübertragung über ein Versorgungsnetz definiert sind.

Weiters ist aus der EP 1 043 107 A2 (Dokument gemäß Artikel 54(3) EPÜ) eine Vorrichtung zum Lichtbogenschweißen bekannt, bei der Prozessdaten von mindestens zwei Lichtbogenschweißgeräten oder mindestens einer Lichtbogeneinheit und mindestens einer Peripherieeinheit in ein elektrisches Versorgungssystem ein- bzw. auskoppelbar sind.

Es sind bereits Datenübertragungssysteme für Schweißgeräte oder Schweißstromquellen bekannt, bei denen ein Datenaustausch zwischen zwei Schweißgeräten oder Schweißstromquellen möglich ist. Hierzu weisen diese Schweißgeräte eine mit der Steuervorrichtung verbundene Schnittstelle, beispielsweise eine RS 232-Schnittstelle, auf. Der Benutzer kann durch Verbinden dieser beiden Schnittstellen über ein Schnittstellenkabel einen Datentransfer durchführen.

Nachteilig ist hierbei, daß die verwendeten Schnittstellenkabeln sehr störempfindlich sind und somit während eines Schweißprozesses, wo sehr hohe Störungen verursacht werden, es zu Datenübertragungsfehlern kommen kann. Weiters ist es bei derartigen Datenübertragungen erforderlich, daß beide Schweißgeräte sich in einem Raum befinden müssen, da nur eine begrenzte Übertragungslänge für die Schnittstellenkabeln zur Verfügung steht.

Der Erfindung liegt die Aufgabe zugrunde, ein Schweißgerät oder eine Schweißstromquelle sowie ein Verfahren zur Datenübertragung zwischen zumindest zwei Schweißgeräten oder Schweißstromquellen zu schaffen, bei dem eine sichere Datenübertragung bzw. ein Datenaustausch gewährleistet ist.

Die Erfindung wird durch die Maßnahmen des Anspruches 1 definiert. Vorteilhaft ist hierbei, daß ohne einen Verdrahtungsaufwand ein Datenaustausch durchgeführt werden kann und somit der Benützer eines derartigen Schweißgerätes keinerlei Kenntnisse aufweisen muß. Ein weiterer Vorteil liegt darin, daß jederzeit auch während eines Schweißprozesses ein Datenaustausch gestartet werden kann, da keine zusätzlichen Verbindungen zwischen den Schweißgeräten hergestellt werden müssen. Dies wirkt sich dann aus, wenn in größeren Montagehallen zwischen zwei oder mehreren Schweißgeräten ein Datenaustausch durchgeführt werden soll, da die Schweißer bzw. Benutzer meist kein Schnittstellenkabel mit sich führen und somit der Schweißprozeß für eine längere Zeitdauer unterbrochen werden muß. Vorteilhaft ist auch, daß das Schnittstellenkabel durch die entstehenden Schweißspritzer nicht beschädigt wird, wie das bei dem aus dem Stand der Technik bekannten System der Fall ist. Bei dem erfindungsgemäßen Schweißgerät bzw, bei dem erfindungsgemäßen Verfahren werden derartige Kaheln nicht mehr benötigt und eine Unterbrechung der Datenübertragung kann somit weitgehendst ausgeschlossen werden.

Weitere vorteihafte Maßnahmen sind in den Ansprüchen 2 bis 9 beschrieben. Die damit erzielbaren Vorteile können aus der Beschreibung entnommen werden.

Die Erfindung wird anschließend durch ein Ausführungsbeispiel näher beschrieben.

Es zeigen:
- Fig. 1: eine schematische Darstellung einer Schweißmaschine bzw. eines Schweißgerätes;
- Fig. 2: ein Blockschaltbild zweier erfindungsgemäßer Schweißgeräte, in vereinfachter, schematischer Darstellung;
- Fig. 3: ein Blockschaltbild für eine Datenübertragung eines erfindungsgemäßen Schweißgerätes mit einem anderen Gerät, insbesondere einem Computer, in vereinfachter schematischer Darstellung.

Einführend wird festgehalten, daß gleiche Teile des Ausführungsbeispieles mit gleichen Bezugszeichen versehen werden.

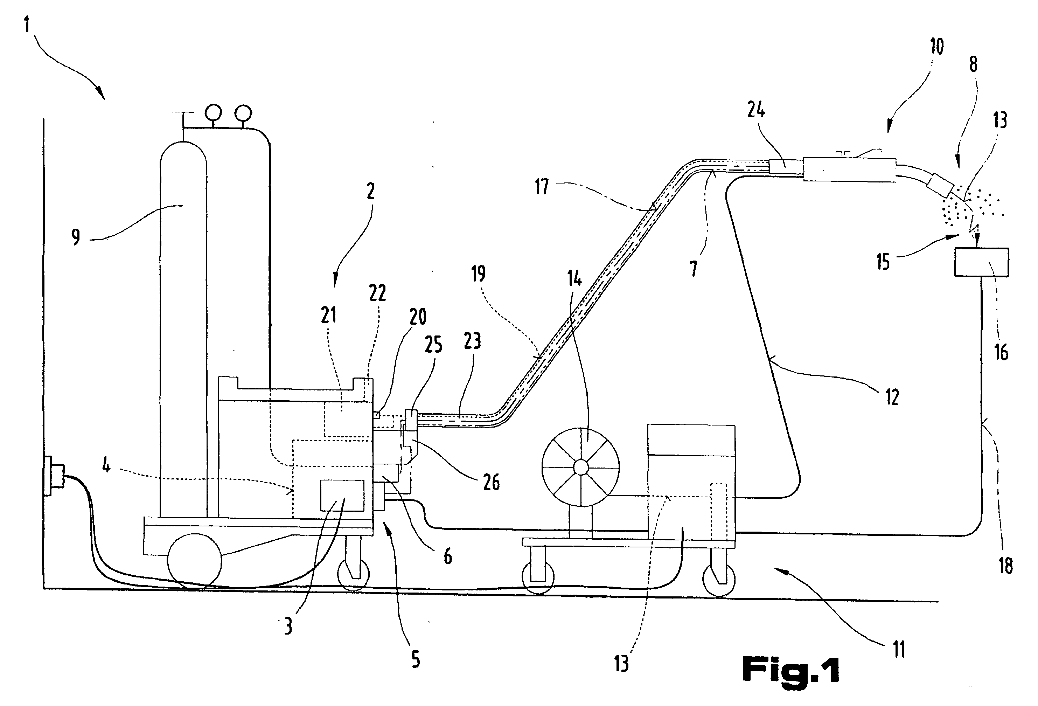

In Fig. 1 ist eine Schweißanlage bzw. ein Schweißgerät 1 für verschiedenste Schweißverfahren ,wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle 2 bzw. einer Schweißstromquelle oder einem Batterieladegerät eingesetzt werden kann.

Das Schweißgerät 1 umfaßt die Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Stromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestelltcn Schweißparameter an die Steuervorrichtung 4 weitergeleitet und von dieser werden anschließend die einzelnen Komponenten der Schweißanlage bzw. des Schweißgerätes 1 angesteuert.

Weiters ist der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist. ist das Schlauchpaket 23 über eine Zugentlastungsvorrichtung 25 mit einem Gehäuse 26, insbesondere mit dem Grundgehäuse des Schweißgerätes 1, verbunden.

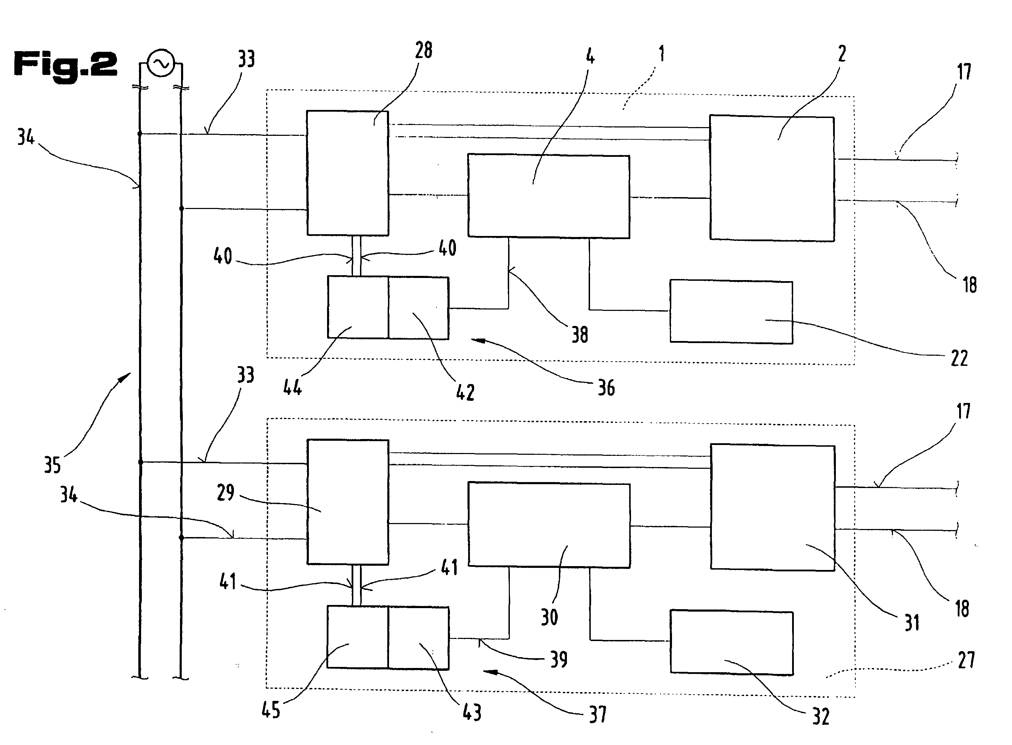

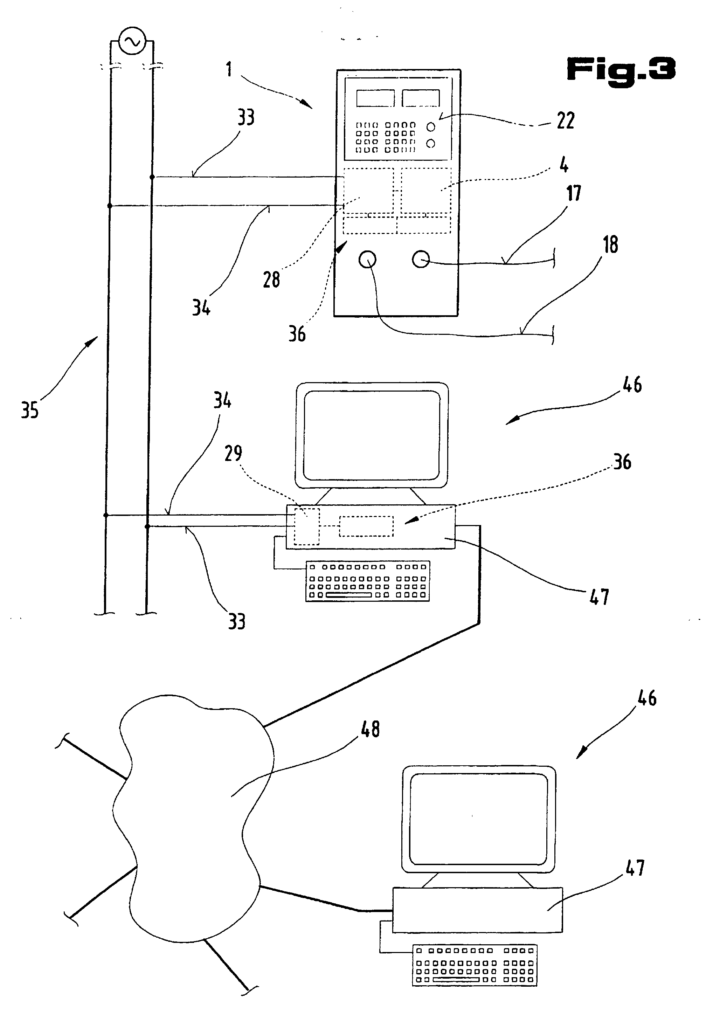

In Fig. 2 und 3 ist ein schematischer Aufbau zweier Schweißgeräte 1 und 27 für eine Datenübertragung untereinander, sowie eines Schweißgerätes mit einer anderen Komponente oder einem anderen Gerät, insbesondere einem Computer, in Form von Blockschaltbildern dargestellt, wobei in Fig. 2 die einzelnen Komponenten der Schweißgeräte 1 und 27 durch eine Versorgungseinheit 28. 29, einer Steuervorrichtung 4, 30, einer Stromquelle 2, 31, insbesondere einer Inverterstromquelle, und einer Ein- und/oder Ausgabevorrichtung 22, 32 gebildet sind.

Grundsätzlich handelt es sich bei diesen Schweißgeräten 1 und 27 um handelsüblich aus dem Stand der Technik bekannte Aufbauten, sodaß auf die Funktionsprinzipien der einzelnen Komponenten nicht genauer eingegangen wird. Die einzelnen Komponenten können durch jeden aus dem Stand der Technik bekannten Aufbau ersetzt bzw. realisiert werden.

Die Versorgungseinheit 28, 29 des Schweißgerätes 1, 27 hat die Aufgabe, eine über Zuleitungen 33, 34 von einem Versorgungsnetz 35, insbesondere einem ein- und/oder mehrphasigen Weschselspannungsnetz, an das Schweißgerät 1 und 27 zugeführte Energie, insbesondere einer Wechselspannung, in eine für die einzelnen Bauelemente der einzelnen Komponenten umgewandelten Gleichspannung umzuwandeln, wobei für einen Schweißprozeß von der Versorgungseinheit 28, 29 eine entsprechende Spannung direkt an die Stromquelle 2, 31 weitergeleitet wird. Selbstverständlich ist es möglich, daß die Stromquelle 2, 31 direkt mit dem Versorgungsnetz 35 verbunden ist, sodaß eine direkte Umwandlung der gelieferten Energie in eine Schweißenergie möglich ist. Bei dem Versorgungsnetz 35 handelt es sich um ein übliches Wechselspannungsnetz von beispielsweise 110V, 230V oder 400V mit einer Frequenz von beispielsweise 50Hz oder 60Hz, wie es für Hausenergieversorgungen der Fall ist oder anderen Versorgungsnetzen 35, wie einem Gleichspannungsnetz.

Die Steuervorrichtung 4, 30 kann durch eine Mikroprozessorsteuerung realisiert werden und hat die Aufgabe, die über die Ein- und/oder Ausgabevorrichtung 22, 32 von einem Benutzer eingestellten Schweißparameter zu verarbeiten und anschließend eine Steuerung bzw. Regelung der Stromquelle 2, 31 mit dem ermittelten Schweißverfahren bzw. Schweißprozeß vorzunehmen. Dabei kann ein direkter Datenaustausch von der Steuervorrichtung 4, 30 mit jeder benötigten Komponente des Schweißgerätes 1, 27 durchgeführt werden. Weiters ist es möglich, daß für das schematisch dargestellte Schweißgerät 1, 27 weitere aus dem Stand der Technik bekannte Komponenten, wie beispielsweise eine serielle und/oder parallele Schnittstelle und weiter zusätzliche externe Komponenten, eingesetzt werden können, wobei bei diesem Ausführungsbeispiel nur die wesentlichsten Komponenten bzw. Baugruppen dargestellt sind.

Das Schweißgerät 1, 27 weist nun zusätzlich eine Kommunikationseinheit 36, 37 auf, welche einerseits über Datenleitungen 38, 39 mit der Steuervorrichtung 4, 30 und andererseits über weitere Leitungen 40, 41 mit der Versorgungseinheit 28, 29 verbunden ist. Selbstverständlich ist es möglich, daß diese Kommunikationseinheit 36, 37 nicht durch eine eigene Komponente, wie schematisch dargestellt, ausgeführt ist, sondern daß diese in einer der bereits bestehenden Komponenten integriert wird. Die Kommunikationseinheit 36, 37 wird durch eine aus dem Stand der Technik bekannte Sende- und/oder Empfangsvorrichtung gebildet und bildet mit einer weiteren Kommunikationseinheit 37, 36 ein Datenübertragungssystem. Durch den Einsatz einer handelsüblichen Kommunikationseinheit 36, 37 für ein Datenübertragungssystem über das Versorgungsnetz 35 wird wiederum auf die detaillierte Darstellung dieser Komponente bzw. Baugruppe verzichtet. Das Kommunikationssystem 36, 37 weist für eine Datenübertragung über das Versorgungsnetz 35 ein Modulationsmodul 42, 43 und ein Demodulationsmodul 44, 45 auf.

Diese beiden Module haben die Aufgabe. einerseits die über die Wechselspannung gesendeten bzw. empfangen Daten auszuwerten und andererseits die zu sendenden Daten auf die Wechselspannung des Versorgungsnetzes 35 aufzumodulieren, wobei für das Aufmodulieren und das Demodulieren der Daten bzw. Signale, insbesondere für die Modulationsmodule 42, 43 und Demodulationsmodule 44. 45 wiederum alle aus dem Stand der Technik bekannten Systeme eingesetzt werden können.

Durch diese Ausstattung des Schweißgerätes 1 und 27 besteht nunmehr die Möglichkeit, daß ein einfacher Datenaustausch zwischen zumindest zwei Schweißgeräten 1 und 27 durchgeführt werden kann. Dabei ist es möglich, daß ein Benutzer bei einem der beiden Schweißgeräte 1 oder 27 einen entsprechenden Schweißprozeß einstellt, der anschließend über das hausinterne Versorgungsnetz 35, welches mit einem externen öffentlichen Wechselspannungsnetz gekoppelt ist, auf ein weiteres Schweißgerät 27 oder 1 übertragen werden kann.

Selbstverständlich ist es möglich. daß ein Datenaustausch von einem Schweißgerät 1 oder 27 mit einem anderen Gerät 46 bzw. einer Komponente, beispielsweise mit einem Rechner, insbesondere einem Computer 47, wie beispielsweise schematisch in Fig. 3 dargestellt, durchgeführt werden kann. Dazu ist es lediglich notwendig, daß dieses Gerät 46 ebenfalls eine kompatible Kommunikationseinheit 36, 37 mit dem Modulationsmodul 42, 43 und dem Demodulationsmodul 44, 45 aufweisen muß. Damit eine entsprechende Steuerung des Datentransfers an die unterschiedlichsten Geräte 46, wie einem weiteren Schweißgerät 1 oder 27 oder dem Computer 47 durchgeführt werden kann, weisen die einzelnen Geräte 46 eine Kennung, weiche vom Benutzer voreinstellbar ist, auf, so kann durch Aussenden dieser Kennung ein entsprechendes Gerät 46 direkt angesteuert bzw. ausgewählt werden.

Dazu wird beispielsweise von dem Benutzer die Datenübertragung über die Ein- und/oder Ausgabevorrichtung 22 oder 32 aktiviert, wobei vom Benutzer jene Kennung eines Gerätes 46 oder eines Schweißgerätes 1 oder 27 eingegeben wird, an die die Daten übersandt werden sollen, sodaß von der Steuervorrichtung 4 oder 30 sämtliche eingestellte und von einem in der Steuervorrichtung 4 oder 27 in einem Speicher hinterlegten Schweißparameter oder andere Programme, wie beispielsweise einem Betriebssystem, Schweißverfahren, oder Auswerteprogramme usw., über die Datenleitung 38, 39 an die Kommunikationseinheit 36 oder 37 weitergeleitet werden. Die Kommunikationseinheit 36 oder 37 kann daraufhin erkennen, daß ein Datenaustausch bzw. eine Datenübertragung erwünscht wird und wandelt die zu übertragenen Daten bzw. Schweißparameter in ein entsprechendes Datenprotokoll um. Anschließend wird von dem Modulationsmodul 42 oder 43 dieses Datenprotokoll auf die Wechselspannung des Versorgungsnetzes 35 aufmoduliert. Dabei ist es möglich. daß dieses Datenprotokoll aus einer Mehrzahl von Bits in Form eines Hochfrequenzsignales gebildet wird, welches der Versorgungsspannung, insbesondere der Wechselspannung, des hausinternen Versorgungsnetzes 35 überlagert wird.

Durch das Aufmodulieren der Daten auf das Versorgungsnetz 35 kann nunmehr das weitere oder eines der weiteren an diesem Versorgungsnetz 35 angeschlossenen Schweißgeräte 27 oder 1 eine Auswertung dieser Daten bzw, dieses Hochfrequenzsignals durchführen. Dazu ist es beispielsweise möglich, daß ein selbständiges Erkennen einer gewünschten Datenaufnahme eines Schweißgerätes 27 oder 1 durchgeführt wird, d.h., daß jedes Schweißgerät 1 oder 27, welches eine derartige Kommunikationseinheit 36, 37 aufweist, eine kontinuierliche Überwachung des Versorgungsnetzes 35 über das Demodulationsmodul 44, 45 durchführt und somit der Benutzer keine Einstellungen vornehmen muß, um eine Datenaufnahme einzuleiten. Dies ist insofern möglich, da sämtliche Schweißgeräte 1 oder 27 oder Geräte 46 bzw. Computer 47 die in dem Datenprotokoll übersendete Kennung auswerten und anschließend mit ihrer Kennung vergleichen, sodaß diese weiteren Geräte 46 erkennen können, ob der Datentransfer für sie bestimmt ist oder nicht. Selbstverständlich ist es möglich, daß diese Art der Datenübertragung auch ohne Kennung durchgeführt werden kann, wobei jedoch bei einem Datentransfer jedes mit einer Kommunikationseinheit 36, 37 ausgestattete Gerät 46 oder Schweißgerät 1, 27 diese Daten empfangen.

Wurde von einem Schweißgerät 1 oder 27 eine entsprechende Datenübertragung eingeleitet, so wird diese von zumindest einem weiteren Schweißgerät 27 oder 1 oder einem anderen Gerät 46 erkannt. Daraufhin wird von diesem Schweißgerät 27 oder 1 oder Gerät 46 eine Auswertung des auf die Versorgungsspannung, insbesondere auf die Wechselspannung, aufmodulierten Hochfrequenzsignals über das Demodulationsmodul 44, 45 vorgenommen. Hat das Demodulationsmodul 44, 45 sämtliche übertragenen Daten empfangen, so werden diese über die Datenleitungen 39 oder 38 an die Steuervorrichtung 30 oder 4 weitergeleitet, wodurch ein weiterer Benutzer diese Daten nunmehr zur Verfügung hat bzw. ein entsprechender Vorgang von einem anderen Schweißgerät 1 oder 27 eingeleitet wird, d.h., daß es möglich ist, daß beispielsweise bei einem Datentransfer von einem Schweißgerät 1 oder 27 auf einem Computer 47 ein entsprechendes Programm gestartet werden kann bzw. eine Funktionssteuerung durchgeführt wird. Dabei ist es möglich, daß von einem Schweißgerät 1 oder 27 der Computer 47 derartig angesteuert wird, daß dieser beispielsweise über ein Telefonnetz bzw. einem Netzwerk eine Verbindung mit anderen Geräten 46, insbesondere anderen Computern 47, oder einem Internet 48 aufbaut und somit von diesem entsprechende Daten heruntergeladen oder übersendet werden, wie dies schematisch in Fig. 3 dargestellt ist.

Selbstverständlich ist es möglich, daß ein direktes Einstellen des Schweißgerätes 1 oder 27 über einen derartigen Datentransfer ebenfalls vorgenommen werden kann. Vorteilhaft ist hierbei, daß am Beginn der Datenübertragung ein entsprechendes Steuersignal bzw, eine Kennung ausgesandt wird. wodurch das empfangende Schweißgerät 27 oder 1, insbesondere die Steuervorrichtung 30 oder 4, erkennen kann, daß nunmehr die einzelnen bereits eingestellten Schweißparameter von einem weiteren Schweißgerät 1 oder 27, insbesondere von einem weiteren Benutzer, geändert werden können.

Weiters ist es möglich, daß bei Verwendung mehrerer Schweißgeräte 1 oder 27 an einem Versorgungsnetz 35 eine gezielte Datenübertragung durchgeführt wird. Hierzu weist jedes Schweißgerät 1 oder 27 eine eigene Kennung auf, welche beispielsweise von dem Benutzer eingestellt werden kann oder direkt vom Hersteller vergeben wird. Damit nunmehr eine definiertc Datenübertragung von einem Schweißgerät 1 oder 27 an ein weiteres Schweißgerät 27 oder 1 durchgeführt werden kann, wird bei dem übertragenen Datenprotokoll zuerst diese Kennung ausgesandt, worauf anschließend entsprechende Steuerbefehle für die Schweißgeräte 1 oder 27 bzw. für die Steuervorrichtungen 4, 30 und die einzelnen Daten der gewünschten Schweißparameter angeschlossen werden. Sämtliche an dem Versorgungsnetz 35 angeschlossene Schweißgeräte 1 oder 27 oder andere Geräte 46 empfangen anschließend dieses Datenprotokoll und können aufgrund der ausgesandten Kennung nunmehr erkennen, ob diese Datenübertragung für sie bestimmt ist. Selbstverständlich ist es möglich, daß ein sogenannter bidirektionaler Datenaustausch von zwei oder mehreren Schweißgeräten 1 oder 27 untereinander oder mit anderen Komponenten bzw. Geräten 46 durchgeführt werden kann, d.h., daß aufgrund eines ausgesandten Datenprotokolls eine Rückantwort bzw. ein Rücksenden von Daten bzw. Steuerbefehlen durchgeführt wird. Dadurch wird in vorteilhafter Weise erreicht, daß das Schweißgerät 1 oder 27, welches den Datentransfer über das Versorgungsnetz 35 gestartet hat, erkennen kann, ob dieser Datentransfer erfolgreich von dem entsprechenden Schweißgerät 1 empfangen wurde.

Bei dem Ausführungsbeispiel nach Fig. 2 ist ein Anwendungsbeispiel für eine derartige Datenübertragung gezeigt. Hierbei sind zwei Schweißgeräte 1 und 27 über das Versorgungsnetz 35 miteinander verbunden bzw. gekoppelt. Durch das Zusammenschalten über das Versorgungsnetz 35 zweier oder mehrerer Schweißgeräte 1 und 27 ist es möglich, daß dadurch auch eine Synchronisierung des Schweißprozesses der einzelnen Schweißgeräte 1 und 27 durchgeführt wird und somit eventuelle Einflüsse der einzelnen Schweißprozesse bei einer Anwendung an einem oder mehreren Werkstücken 16 unterbunden werden können. Damit eine entsprechend hohe Schweißqualität erzielt werden kann. müssen die beiden Schweißgeräte 1 und 27 synchron laufen, d.h., daß zu jedem Zeitpunkt des Schweißprozesses jedes Schweißgerät 1 und 27 die gleiche Funktion bzw. den gleichen Regelkreis durchführen oder diese bzw. deren Regelkreis über das Versorgungsnetz 35 aufeinander abgestimmt bzw. gekoppelt werden.

Dazu kann beispielsweise der Benutzer über die Ein- und/oder Ausgabevorrichtung 22 eines Schweißgerätes 1 einen entsprechenden Schweißprozeß einstellen, wobei die einzelnen Schweißparameter anschließend, wie zuvor beschrieben, an das weitere Schweißgerät 27 übertragen werden. Zusätzlich ist es möglich, daß der Benutzer einen zusätzlichen Schweißparameter zum Synchronisieren zumindest eines weiteren Schweißgerätes 27 einstellt, wodurch erreicht wird, daß bei dem weiteren Schweißgerät 27 die Steuervorrichtung 30 deaktiviert wird. Damit übernimmt nunmehr die Steuervorrichtung 4 des Schweißgerätes 1 die Regelung der beiden zusammengeschaltenen Stromquellen 2, 31, d.h., daß bei einem Regelvorgang von der Steuervorrichtung 4 für die Stromquelle 2 dieser Regelvorgang gleichzeitig über das Versorgungsnetz 35 an das weitere Schweißgerät 27 weitergeleitet wird, worauf von dem Kommunikationsmodul 37 eine direkte Weiterleitung des demodulierten Signals an die Stromquelle 31 durchgeführt wird.

Damit wird erreicht, daß von einer Steuervorrichtung 4 mehrere Stromquellen unterschiedlicher Schweißgeräte 1 oder 27 gesteuert bzw. geregelt werden können. Die geringe Laufzeitverzögerung kann dabei außer acht gelassen werden bzw. kann durch einen Abgleichprozeß zwischen den beiden Schweißgeräten 1 und 27 ermittelt werden, sodaß diese Laufzeitverzögerung aufgrund des Datentransfers in den Schweißprozeß integriert werden und somit die Schweißqualität wesentlich erhöht werden kann.

Werden jedoch zwei oder mehrere Schweißgeräte 1 und 27 über das Versorgungsnetz 35 zusammengeschalten, so muß jede Steuervorrichtung 4, 30 selbständig den Regelprozeß durchführen. Damit jedoch wiederum eine sehr gute Schweißqualität erreicht werden kann, müssen die einzelnen Schweißgeräte 1 und 27 aufeinander abgestimmt werden. Dies kann in einfacher Form durch entsprechende Synchronisiersignale für den Schweißprozeß über das Versorgungsnetz 35 erfolgen.

Die Synchronisierung von Schweißgeräten 1 und 27 kann beispielsweise derartig erfolgen, daß eines der zusammengeschaltenen Schweißgeräte 1, 27 eine sogenannte Master-Funktion übernimmt, an dem anschließend die weiteren Schweißgeräte 27, 1 synchronisiert werden. Zum Beginn des Schweißprozesses wird ein entsprechendes Startsignal ausgesandt, sodaß alle verbundenen Schweißgeräte 1, 27 zu einem exakten Zeitpunkt mit dem Schweißprozeß beginnen. Anschließend wird beispielsweise von diesem Schweißgerät 1 zu bestimmten Zeitpunkten des Schweißprozesses ein Synchronisiersignal erzeugt, welches von einer Kommunikationseinheit 36 auf das Versorgungsnetz 35 aufmoduliert wird. Dieses Synchronisiersignal wird anschließend von jeder Kommunikationseinheit 36, 37 empfangen, worauf die Steuervorrichtungen 4, 30 der Schweißgeräte 1, 27 ihren Regelprozeß auf das Synchronisiersignal abstimmen können. Dadurch wird erreicht. daß jedes Schweißgerät 1, 27 einen synchronen Schweißprozeß mit dem Master-Schweißgerät durchführen kann und die Schweißqualität wesentlich erhöht wird. Selbstverständlich ist es möglich, daß bei einer Fehlfunktion eines Schweißgerätes 1, 27 dies über das Versorgungsnetz 35 dem Master-Schweißgerät mitgeteilt wird, sodaß beispielsweise der synchrone Schweißprozeß, der von mehreren Schweißgeräten 1, 27 durchgeführt wird, abgebrochen werden kann.

Damit für die Synchronisierung eine geringe Laufzeitverschiebung eingehalten werden kann, ist es vorteilhaft, daß zuerst ein Abgleichzyklus zwischen den einzelnen Schweißgeräten 1, 27 durchgeführt wird. Dieser Abgleichzyklus hat beispielsweise die Aufgabe. festzustellen, welche Schweißgeräte 1, 27 den Schweißprozeß durchführen, sodaß diese anschließend aktiviert werden und somit nur mehr ein Synchronisiersignal ausgesendet werden kann, ohne daß zusätzliche Steuerbefehle oder Kennungen bzw. Schweißdaten übertragen werden müssen.

Der wesentliche Vorteil dieses System liegt darin, daß ohne zusätzlichen Verdrahtungsaufwand, also ohne zusätzliche Schnittstellen mit Schnittstellenkabeln, ein Datenaustausch bzw. eine Synchronisierung zwischen zwei oder mehreren Schweißgeräten 1, 27 hergestellt werden kann, wobei diese Art der Anwendung bevorzugt in großen Montagehallen eingesetzt wird, wo meist zusätzlich Verbindungskabeln störend wirken. Weiters wird erreicht, daß dadurch in einfacher Form und sehr rasch spezielle Schweißverfahren bzw. Schweißprozesse durch einfaches zusammenschalten der Ausgänge der Stromquellen 3, 31 realisiert werden können, ohne daß dazu geschultes Personal benötigt wird.

Selbstverständlich ist es möglich, daß auch ein Datenaustausch mit jedem beliebigen anderen Gerät 46, wie beispielsweise einem Computer 47 oder einer SPS-Steuerung, durchgeführt werden kann. Es muß nur sichergestellt werden, daß diese Geräte 46 die selben Kommunikationseinheiten 36 oder 37 aufweisen bzw. das aufmodulierte Datenprotokoll demodulieren können. Weiters ist es möglich, daß jedes beliebige Verfahren für einen Datenaustausch in Form eines Datenprotokolles zweier Geräte untereinander eingesetzt werden kann, da durch eine derartige Datenübertragung ein sogenanntes zum Stand der Technik zählendes BusSystem realisiert werden kann. Es ist auch möglich, daß über die Kommunikationseinheiten 36, 37 der einzelnen Schweißgeräte 1, 27, beispielsweise von einem Computer 47, Wartungsarbeiten durchgeführt werden können.

Weiters ist es möglich, daß die Datenübertragung nicht nur auf das Versorgungsnetz 35 des Hauses bzw. der Montagehalle beschränkt ist, sondern daß diese auch über sogenannte Freileitungen zu anderen Haushalten oder Montagehallen durchgeführt werden kann. Dazu ist es auch möglich, daß, wie zuvor bereits erwähnt, von einem derartigen Gerät, insbesondere einem Schweißgerät 1 oder 27, durch Ansteuern eines weiteren Gerätes 46, insbesondere eines Rechners, einer SPS-Steuerung oder eines Computers 47 usw., ein Datentransfer über das Versorgungsnetz 35 eingeleitet wird, worauf von den weiteren Geräten 46, insbesondere den Rechner, der SPS oder dem Computer 47 usw., eine Umsetzung der Daten auf ein anderes Netz, insbesondere ein Datennetz, wie beispielsweise einem DATEX-P Netz oder dem Internet 48 oder einem Intranet durchgeführt werden kann und somit ohne zusätzliche Verkabelungen ein Datentransfer bzw. ein Datenaustausch oder eine Funktionssteuerung bzw. Wartungsarbeiten von weit entfernten Orten durchgeführt werden können. Dieser Datentransfer bzw. Verbindungsaufbau ist schematisch in Fig. 3 dargestellt. Dabei ist es auch möglich, daß von anderen Geräten 46, wie beispielsweise einem Computer 47, eine Verbindung aufgebaut werden kann, d.h., daß direkt über das Versorgungsnetz 35 das Schweißgerät 1 oder 27 angesteuert wird oder von dem Computer 47 über ein Computernetz bzw. das Internet 48 eine Verbindung mit einem weiteren Computer 47 hergestellt wird, worauf von dem weiteren Computer 47 eine Verbindung über das Versorgungsnetz 35 mit dem Schweißgerät 1 oder 27 bzw. umgekehrt hergestellt wird.

Dazu ist zu erwähnen, daß bei den heutigen Hausversorgungsnetzen meist ein sogenanntes Hausnetz mit einem seriellen Datennetz, also ein derzeit bei Neubauten eingesetztes Hauskommunikationssystem zum Steuern unterschiedlicher Komponenten, wie einer Waschmaschine, Heizung usw., von einer Zentralle über einen Computer gebildet wird. verwendet werden kann, sodaß die zuvor beschriebenen Verfahren für einen Datenaustausch auch auf diesen Hausnetzen durchgeführt werden können. Dazu ist es lediglich notwendig, eine entsprechende Kommunikationseinheit 36, 37, welche auf das Hausnetz abgestimmt ist, einzusetzen, wobei dazu die Verbindung zu diesem Hausnetz über eine zusätzliche Leitung im Versorgungskabel des Schweißgerätes 1 oder 27 benötigt wird. Selbstverständlich ist es möglich, das Schweißgerät 1, 27 mit beiden System auszustatten, sodaß entsprechend dem benötigten System eine Datenübertragung durchgeführt werden kann, wobei die Erkennung vorzugsweise des Systems automatisch erfolgt. Bei eine Einsatz in Verbindung mit einem Hausnetz ist es zweckmäßig, daß die Kommunikationseinheit 36, 37 bzw. das verwendete Datenprotokoll auf das Datenprotokoll des Hausnetzes abgestimmt ist, da damit Vorteile des Hausnetzes, wie beispielsweise eine Ansteuerung von einer Zentrale, eine automatische Herstellung von Telefonverbindungen oder. ein Aufbau von Internetverbindungen usw., genutzt werden können.

Abschließend sei darauf hingewiesen, daß in den zuvor beschriebenen Ausführungsbeispielen die einzelnen Teile bzw. Bauelemente oder Baugruppen schematisch bzw. vereinfacht darge stellt sind.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Schweißgerät
- 28: Versorgungseinheit
- 29: Versorgungseinheit
- 30: Steuervorrichtung

- 31: Stromquelle
- 32: Ein- und/oder Ausgabevorrichtung
- 33: Zuleitung
- 34: Zuleitung
- 35: Versorgungsnetz

- 36: Kommunikationseinheit
- 37: Kommunikationseinheit
- 38: Datenleitung
- 39: Datenleitung
- 40: Leitung

- 41: Leitung
- 42: Modulationsmodul
- 43: Modulationsmodul
- 44: Demodulationsmodul
- 45: Demodulationsmodul

- 46: Gerät
- 47: Computer
- 48: Internet

## Patentansprüche

1. Verfahren zur Datenübertragung und/oder Synchronisierung zwischen zumindest einem Schweißgerät (1, 27) oder einer Stromquelle (2, 31) und einem weiteren Schweißgerät (1, 27) oder einer weiteren Stromquelle (2, 31) oder mit einer anderen Komponente bzw. einem anderen Gerät (46), wobei zumindest ein Schweißprozeß über zumindest eine Steuervorrichtung (4, 30) gesteuert und/oder geregelt wird und zumindest ein Verbraucher, insbesondere ein zwischen einem Werkstück (16) und einem Schweißbrenner (10) aufgebauter Lichtbogen (15), von der bevorzugt im Schweißgerät (1, 27) integrierten Stromquelle (2, 31) versorgt wird und das Schweißgerät (1, 27) oder die Stromquelle (2, 31) und/oder die andere Komponente bzw. das andere Gerät (46) von einem Versorgungsnetz (35) mit Energie versorgt werden, wobei zwischen dem Schweißgerät (1, 27) oder der Stromquelle (2, 31) und einem weiteren Schweißgerät (27, 1) oder einer weiteren Stromquelle (31, 2) oder mit einer anderen Komponente bzw. einem anderen Gerät ein Datenaustausch bzw. eine Datenübertragung durchgeführt wird, **dadurch gekennzeichnet, daß** die Daten, Signale bzw. Schweißparameter oder Synchronisiersignale für zumindest ein Schweißgerät (1, 27) oder eine Stromquelle (2, 31) oder eine andere Komponente bzw. ein anderes Gerät (46), insbesondere einen Rechner, eine SPS-Steuerung, ein Datenmodul oder einen Computer (47) usw., über eine Kommunikationseinheit (36, 37) auf das Versorgungsnetz (35) übertragen, insbesondere von einem Modulationsmodul (42, 43) aufmoduliert werden, worauf von dem weiteren Schweißgerät (1, 27) oder der weiteren Stromquelle (2, 31) und/oder einer anderen Komponente bzw. einem anderen Gerät (46) die übertragenen, insbesondere aufmodulierten Daten, Signale bzw. Schweißparameter oder Synchronisiersignale über eine weitere, bevorzugt integrierte Kommunikationseinheit (36, 37), insbesondere mit einem Demodulationsmodul (44, 45), vom Versorgungsnetz (35) ausgelesen und verarbeitet werden und gegebenenfalls danach ein weiterer Datenaustausch, insbesondere ein bidirektionaler Datentransfer, durchgeführt wird, und daß von einem Schweißgerät (1, 27), insbesondere einem Master-Schweißgerät, zu bestimmten Zeitpunkten des Schweißprozesses ein Synchronisiersignal erzeugt wird, worauf die Steuervorrichtungen der weiteren Schweißgeräte ihren Regelprozeß auf das Synchronisiersignal abstimmen.

2. Verfahren nach Anspruch 1, **dadurch gekennzeichnet, daß** die manuell in eine Steuereinheit, die insbesondere im Schweißgerät (1, 27) oder in der Stromquelle (2, 31) angeordnet ist, oder einer Komponente bzw. einem Gerät (46) eingegebenen Daten, Signale bzw. Schweißparameter oder Synchronisiersignale eines Schweißprozesses über das Versorgungs netz (35) auf ein weiteres Schweißgerät (1, 27) oder eine weitere Stromquelle (2, 31) und/oder eine weitere Komponente und/oder ein weiteres Gerät (46) übertragen werden.

3. Verfahren nach einem der vorhergehenden Ansprüche, **dadurch gekennzeichnet, daß** die Daten, Signale bzw. Schweißparameter oder Synchronisiersignale zu einem Datenprotokoll aus einer Mehrzahl von Bits in Form eines Hochfrequenzsignals zusammengefaßt werden.

4. Verfahren nach einem der vorhergehenden Ansprüche, **dadurch gekennzeichnet, daß** die über das Versorgungsnetz (35) übermittelten Daten, Signale bzw. Schweißparameter oder Synchronisiersignale durch die jedem Schweißgerät (1, 27) zugeordnete Kommunikationseinheit (36, 37) bzw. dessen Demodulationsmodul (44, 45) kontinuierlich überwacht werden.

5. Verfahren nach einem der vorhergehenden Ansprüche, **dadurch gekennzeichnet, daß** am Beginn der Übertragung der Daten, Signale bzw. Schweißparameter oder Synchronisiersignale ein Steuersignal ausgesandt wird.

6. Verfahren nach einem der vorhergehenden Ansprüche, **dadurch gekennzeichnet, daß** bei dem zu übertragenden Datenprotokoll zuerst eine Kennung ausgesandt wird, worauf anschließend entsprechende Steuerbefehle und Daten der gewünschten Schweißparameter an zumindest ein durch die Kennung definiertes Schweißgerät (1, 27) oder eine Stromquelle (2, 31) oder eine Komponente oder ein Gerät (46) bzw. eine Steuervorrichtung (4, 30) übermittelt werden.

7. Verfahren nach einem der vorhergehenden Ansprüche, **dadurch gekennzeichnet, daß** die Daten, Signale bzw. Schweißparameter oder Synchronisiersignale eines Regelvorganges in der Steuervorrichtung (4, 30) des Schweißgerätes (1, 27) oder der Stromquelle (2, 31) über das Versorgungsnetz (35) zur Regelung des weiteren Schweißgerätes (1, 27) oder der Stromquelle (2, 31) weitergeleitet werden.

8. Verfahren nach einem der vorhergehenden Ansprüche, **dadurch gekennzeichnet, daß** die durch den Datentransfer entstehende Laufzeitverzögerung durch einen Abgleichprozeß zwischen den Schweißgeräten (1, 27) bzw. Stromquellen (2, 31), Komponenten, Steuervorrichtungen (4, 30) oder Geräten (46) ermittelt wird, worauf die Steuerung und/oder Regelung des Schweißprozesses der Schweißgeräte (1, 27) gleichzeitig begonnen und/oder durchgeführt wird.

9. Verfahren nach einem der vorhergehenden Ansprüche, **dadurch gekennzeichnet, daß** ein Schweißgerät (1, 27) als Master-Gerät definiert wird, worauf anschließend zumindest ein weiteres Schweißgerät (1, 27) über das Versorgungsnetz (35) auf dieses synchronisiert bzw. abgestimmt wird.

## Claims

1. Method of transmitting data between and/or synchronising at least one welding device (1, 27) or a current source (2, 31) and another welding device (1, 27) or another current source (2, 31) or another component or another device (46), whereby at least one welding process is controlled and/or regulated by means of at least one control system (4, 30), and at least one consumer, in particular an arc (15) struck between a workpiece (16) and a welding torch (10), is supplied by the current source (2, 31), which is preferably integrated in the welding device (1, 27), and the welding device (1, 27) or the current source (2, 31) and/or the other component or other device (46) are supplied with power from a power supply (35), an exchange of data or a data transmission being run between the welding device (1,27) or the current source (2, 31) and another welding device (27, 1) or another current source (31, 2) or with another component or another device, **characterised in that** the data, signals and welding parameters or synchronisation signals for at least one welding device (1, 27) or a current source (2, 31) or another component or another device (46), in particular a computing device, a SPC controller, a data module or a computer (47) etc., are transmitted via a communication unit (36, 37) to the power supply (35), in particular are modulated by a modulation unit (42, 43), whereupon the data, in particular the modulated data, signals and welding parameters or synchronisation signals transmitted from the other welding device (1, 27) or the other current source (2, 31) and/or another component or another device (46) are read and processed by the power supply (35) via another, preferably integrated communication unit (36, 37), in particular having a demodulation module (44,45), and another data exchange, in particular a two-way data transfer, is run if necessary and a synchronisation signal is generated by a welding device (1, 27), in particular a master welding device, at specific instants of the welding process, whereupon the control systems of the other welding devices synchronise their control process with the synchronisation signals.

2. Method as claimed in claim 1, **characterised in that** the data, signals or welding parameters or synchronisation signals of a welding process, which are manually entered in a control unit disposed in particular in the welding device (1, 27) or in the current source (2, 31), or a component or device (46), are transmitted via the power supply (35) to another welding device (1, 27) or another current source (2, 31) and/or another component and/or another device (46).

3. Method as claimed in one of the preceding claims **characterised in that** the data, signals and welding parameters or synchronisation signals are condensed into a data protocol of a plurality of bits in the form of a high-frequency signal.

4. Method as claimed in one of the preceding claims, **characterised in that** the data, signals and welding parameters or synchronisation signals transmitted via the power supply (35) are continually monitored by the communication unit (36, 37) assigned to each welding device (1, 27) or the demodulation module (44, 45) thereof.

5. Method as claimed in one of the preceding claims, **characterised in that** a control signal is transmitted at the start of the transmission of data, signals and welding parameters or synchronisation signals.

6. Method as claimed in one of the preceding claims, **characterised in that** with respect to the data protocol to be transmitted, an identification code is transmitted first of all, after which appropriate control commands and data relating to the desired welding parameters are transmitted to at least one welding device (1, 27) defined by an identification code or a current source (2, 31) or a component or a device (46) or a control system (4, 30).

7. Method as claimed in one of the preceding claims, **characterised in that** the data, signals and welding parameters or synchronisation signals of a control procedure in the control system (4, 30) of the welding device (1, 27) or the current source (2, 31) are forwarded via the mains supply (35) in order to control the other welding device (1, 27) or the current source (2, 31).

8. Method as claimed in one of the preceding claims, **characterised in that** the time delay resulting from the data transfer due to a synchronisation process between the welding devices (1, 27) and current sources (2, 31), components, control systems (4, 30) or devices (46) is determined, after which the control and/or regulation of the welding process of the welding devices (1, 27) is simultaneously initiated and/or run.

9. Method as claimed in one of the preceding claims, **characterised in that** one welding device (1, 27) is defined as being the master device, after which at least one other welding device (1, 27) is then synchronised or tuned to it via the power supply (35).

## Revendications

1. Procédé pour la transmission de données et/ou la synchronisation entre au moins un appareil de soudage (1, 27) ou une source de courant (2, 31 ) et un autre appareil de soudage (1, 27) ou une autre source de courant (2, 31) ou avec un autre composant respectivement un autre appareil (46), où au moins un processus de soudage est commandé et/ou réglé par au moins un dispositif de commande (4, 30), et au moins un consommateur, notamment un arc de lumière (15) formé entre une pièce (16) et un chalumeau (10), est alimenté par la source de courant (2, 31) intégrée de préférence dans l'appareil de soudage (1, 27), et en ce que l'appareil de soudage (1, 27) ou la source de courant (2, 31) et/ou l'autre composant respectivement l'autre appareil (46) sont alimentés par un secteur (35) en énergie, où est exécuté entre l'appareil de soudage (1, 27) ou la source de courant (2, 31) et un autre appareil de soudage (27, 1) ou une autre source de courant (31, 2) ou avec un autre composant respectivement un autre appareil un échange de données respectivement une transmission de données, **caractérisé en ce que** les données, signaux respectivement paramètres de soudage ou signaux de synchronisation pour au moins un appareil de soudage (1, 27) ou une source de courant (2, 31) ou un autre composant respectivement un autre appareil (46), notamment un calculateur, une commande SPS, un module de données ou un ordinateur (47) etc. sont transmis par une unité de communication (36, 37) au secteur (35), notamment sont appliqués par modulation par un module de modulation (42, 43), et ensuite, par l'autre appareil de soudage (1, 27) ou l'autre source de courant (2, 31) et/ou un autre composant respectivement un autre appareil (46), les données, signaux ou paramètres de soudage ou signaux de synchronisation transmis, notamment rapportés par modulation sont sélectionnés et traités par une autre unité de communication (36, 37) de préférence intégrée, notamment avec un module de démodulation (44, 45), du secteur (35) et ensuite, le cas échéant, un autre échange de données, notamment un transfert de données bidirectionnel, est exécuté, et **en ce que** par un appareil de soudage (1, 27), notamment un appareil de soudage maître, à des instants définis du processus de soudage, un signal de synchronisation est produit, et de ce fait les dispositifs de commande des autres appareils de soudage accordent leur processus de réglage au signal de synchronisation.

2. Procédé selon la revendication 1, **caractérisé en ce que** les données, signaux respectivement paramètres de soudage ou signaux de synchronisation d'un processus de soudage entrés manuellement dans une unité de commande, qui est disposée notamment dans l'appareil de soudage (1, 27) ou dans la source de courant (2, 31) ou dans un composant respectivement appareil (46) sont transférés par le secteur (35) à un autre appareil de soudage (1, 27) ou une autre source de courant (2, 31) et/ou un autre composant et/ou un autre appareil (46).

3. Procédé selon l'une des revendications précédentes, **caractérisé en ce que** les données, signaux respectivement paramètres de soudage ou signaux de synchronisation sont réunis en un protocole de données à partir d'une pluralité d'éléments binaires sous la forme d'un signal haute fréquence.

4. Procédé selon l'une des revendications précédentes, **caractérisé en ce que** les données, signaux respectivement paramètres de soudage ou signaux de synchronisation transmis par le secteur (35) sont surveillés continuellement par l'unité de communication (36, 37) respectivement son module de démodulation (44, 45) associée à chaque appareil de soudage (1, 27).

5. Procédé selon l'une des revendications précédentes, **caractérisé en ce qu'**au début de la transmission des données, signaux respectivement paramètres de soudage ou signaux de synchronisation, un signal de commande est émis.

6. Procédé selon l'une des revendications précédentes, **caractérisé en ce que** dans le protocole de données à transmettre, d'abord un indicatif est émis, et ensuite des instructions de commande et des données correspondantes des paramètres de soudage recherchés sont transmis à au moins un appareil de soudage (1, 27) défini par l'indicatif ou une source de courant (2, 31) ou un composant ou un appareil (46) respectivement un dispositif de commande (4, 30).

7. Procédé selon l'une des revendications précédentes, **caractérisé en ce que** les données, signaux respectivement paramètres de soudage ou signaux de synchronisation d'une opération de réglage dans le dispositif de commande (4, 30) de l'appareil de soudage (1, 27) ou de la source de courant (2, 31 ) sont transmis par le secteur (35) pour le réglage de l'autre appareil de soudage (1, 27) ou de la source de courant (2, 31).

8. Procédé selon l'une des revendications précédentes, **caractérisé en ce que** le retard du temps de fonctionnement résultant du transfert des données est déterminé par un processus de mise au point entre les appareils de soudage (1, 27) respectivement sources de courant (2, 31), composants, dispositifs de commande (4, 30) ou appareils (46), à la suite de quoi la commande et/ou le réglage du processus de soudage des appareils de soudage (1, 27) est commencé et/ou exécuté en même temps.

9. Procédé selon l'une des revendications précédentes, **caractérisé en ce qu'**un appareil de soudage (1, 27) est défini comme appareil maître, et ensuite au moins un autre appareil de soudage (1, 27) est synchronisé par le secteur (35) à celui-ci respectivement accordé.
